# EUROPEAN PATENT APPLICATION

(11) **EP 2 495 799 A1**
(43) Date of publication of application: **05.09.2012**
(21) Application number: 10852780.5
(22) Date of filing: 08.11.2010
(51) Int. Cl.: H01M 10/38

(54) **LITHIUM ION BATTERY GIRDLED AND SEALED IN ALUMNIUM CASE WITH POSITIVE TAB AND NEGATIVE TAB FETCHED OUT IN THE SAME DIRECTION**

(30) Priority: 11.06.2010 CN 201010197892
(71) Applicant: Dongguan City Germany And Thailand New Energy Science & Technology Co., Ltd, Dongguan, Guangdong 523000 (CN)
(72) Inventor: GU, Huijun, Dongguan, Guangdong 523000 (CN)
(74) Representative: Hryszkiewicz, Danuta
(86) International application number: PCT/CN2010/078524
(87) International publication number: WO 2011/153789

(57) **Abstract**

A lithium ion battery girdled and sealed in a columned aluminium case with a positive electrode and a negative electrode fetched out in the same direction is provided. The lithium ion battery includes a lithium ion battery core which is arranged in the columned aluminium case. A positive pin and a negative pin connected with the positive electrode and the negative electrode respectively are fetched out through an end cover or a rubber plug, or fetched out in the same direction through the end cover and riveted with a positive tab and a negative tab respectively. The lithium ion battery core is sealed in the columned aluminium case with a sealing zone and a girdling zone which are configured by rolling. An explosion-protection pressed mark is set on the bottom of the columned aluminium case. The lithium ion battery girdled and sealed in the columned aluminium case with the positive electrode and the negative electrode fetched out in the same direction has a simple structure and high security,and is convenient for use. The lithium ion battery core with the positive pin and the negative pin fetched out through the end cover or the rubber plug packed in the columned aluminium case is easily connected in series or in parallel when used in different electrical apparatus. The explosion-protection pressed mark set on the bottom of the aluminium case releases gas effectively which is produced by the lithium ion battery in different conditions, and prevents the explosion due to the gas not released in time.

## Description

The invention relates to the field of lithium ion battery technology, and more particularly to a lithium ion battery. The lithium ion battery has a girdled and sealed cylindrical aluminum shell structure with anode and cathode lead-out along the same direction.

Conventional cylindrical lithium ion batteries generally use rigid packaging materials such as stainless steel. Since lithium ion batteries are likely to produce gas in the case of damage, overcharge, and high temperature, a gas outlet is commonly arranged at an anode head thereof to avoid explosion caused by delayed gas release. The anode of a conventional cylindrical lithium ion battery is usually a protruded head and the cathode thereof is a flat bottom. In use, cylindrical lithium ion batteries are often connected in series to provide high capacity and high power of voltage and current for electrical appliances. If they are connected in parallel, a dedicated battery box is required. Thus, it is troublesome and difficult to meet varied requirements under different occasions either in series or in parallel.

One objective of the invention is to provide a cylindrical lithium ion battery that has a rolling girdled and sealed structure, with anode and cathode lead-out along the same direction, and is easily used in series or in parallel under different occasions. The battery comprises a gas-release impression at the bottom thereof.

To achieve the above objective, in accordance with one embodiment of the invention, there provided is a lithium ion battery comprising a lithium ion battery core, a cylindrical aluminum shell, a positive guide needle of anode, a negative guide needle of cathode, an end cover, a sealing band, and a girdling band, wherein the lithium ion battery core is arranged within the cylindrical aluminum shell, the positive guide needle of anode and the negative guide needle of cathode are led out from the end cover, the lithium ion battery core is sealed in the cylindrical aluminum shell through the sealing band and the girdling band which are molded by rolling, and a bottom plane of the cylindrical aluminum shell is provided with an explosion-proof impression.

The positive guide needle of anode and the negative guide needle of cathode are led out in the same direction from the end cover and are respectively riveted to an anode ear and a cathode ear.

The end cover is a rubber plug.

The explosion-proof impression X-shaped or a Y-shaped.

The lithium ion battery has a simple structure, convenient use, and high safety. Since the lithium ion battery core is sealed in the cylindrical aluminum shell, and the positive guide needle of anode and negative guide needle of cathode are led out in the same direction from the end cover, the lithium ion batteries can be conveniently connected either in series or in parallel when used in different electrical appliances. The rolling girdled and sealed structure applied to the cylindrical aluminum shell makes it possible for high efficient production and reliable sealing quality. In addition, the explosion-proof impression arranged at the bottom of the aluminum shell can effectively release gas produced by the lithium ion battery under different occasions to avoid explosion caused by delayed gas release.

FIG. 1 is a schematic diagram of a lithium ion battery in accordance with one embodiment of the invention;

FIG. 2 is a schematic diagram of guide needles riveted to an anode ear and a cathode ear in accordance with one embodiment of the invention; and

FIG. 3a and 3b are schematic diagrams of an explosion-proof impression at the bottom of a cylindrical aluminum shell in accordance with one embodiment of the invention.

In the drawings, the hollowing reference numbers are used: lithium ion battery core 1, cylindrical aluminum shell 2, end cover 3, positive guide needle of anode 4, negative guide needle of cathode 5, explosion-proof impression 6, sealing band 7, girdling band 8, rubber plug 9, anode ear 10, and cathode ear 11.

The invention is explained in further detail below with the aid of the examples and attached drawing.

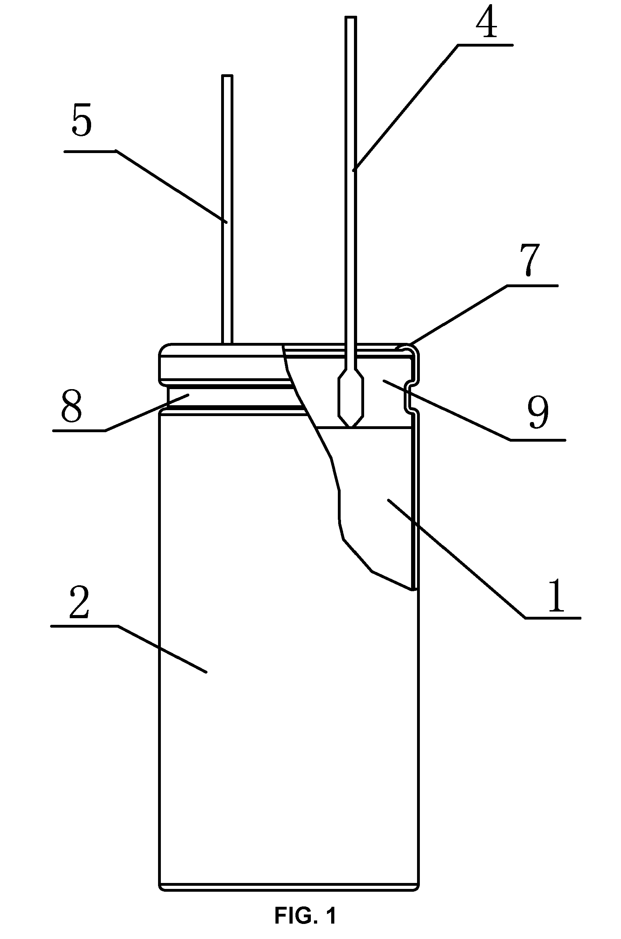

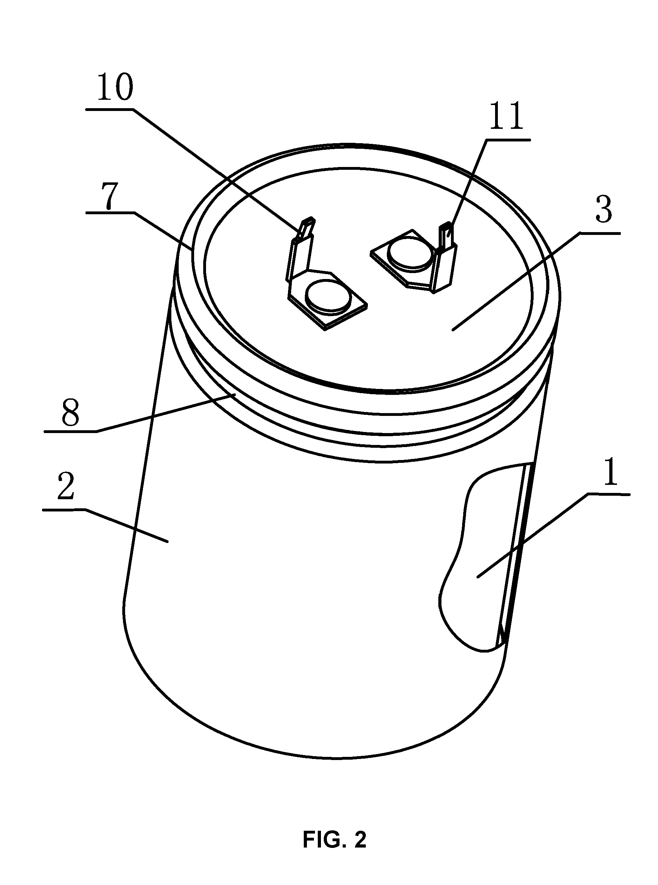

As shown in FIGS. 1 and 2, a lithium ion battery comprises a lithium ion battery core 1. The lithium ion battery core 1 is arranged within a cylindrical aluminum shell 2. A positive guide needle of anode 4 and a negative guide needle of cathode 5 are led out from an end cover 3. The lithium ion battery core 1 is sealed in the cylindrical aluminum shell 2 through a sealing band 7 and a girdling band 8 which are molded by rolling. The bottom plane of the cylindrical aluminum shell 2 is provided with an explosion-proof impression 6. The positive guide needle of anode 4 and the negative guide needle of cathode 5 are led out in the same direction from the end cover 3 and are respectively riveted to an anode ear 10 and a cathode ear 11. The top end of the cylindrical aluminum shell 2 is applied either with the end cover 3 or a rubber plug 9.

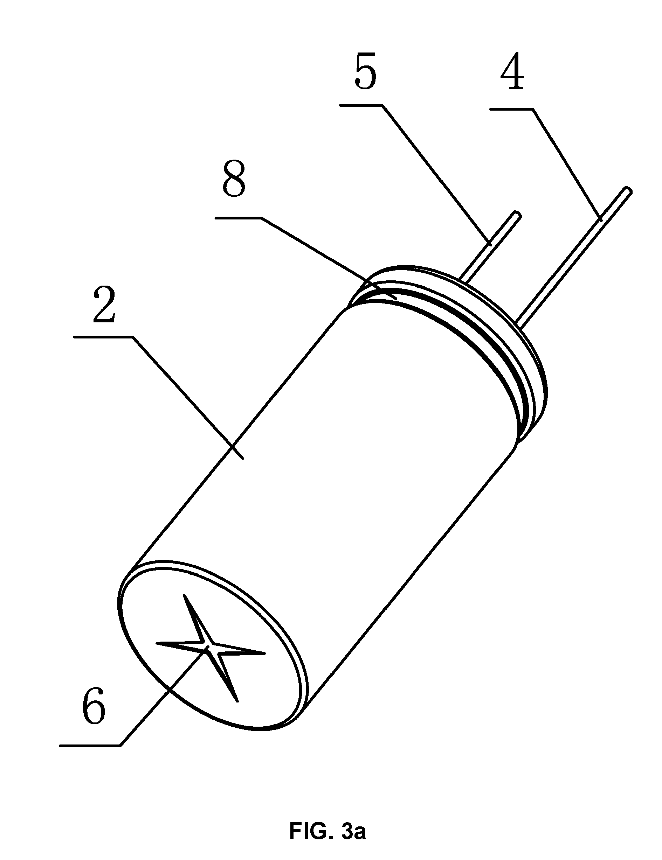

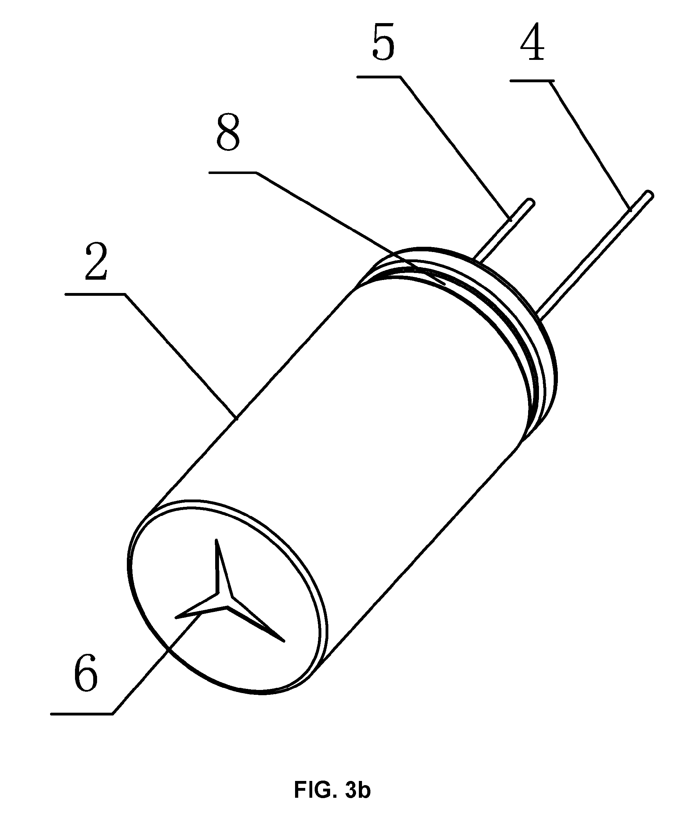

As shown in FIGS. 3a and 3b, the explosion-proof impression at the bottom plane of the cylindrical aluminum shell 2 is either X-shaped or Y-shaped.

In accordance with the invention, the lithium ion battery core 1 is sealed in the cylindrical aluminum shell 2. The positive guide needle of anode 4 and negative guide needle of cathode 5 are led out in the same direction from the end cover 3 or the rubber plug 9. The sealing band 7 and the girdling band 8, molded using a rolling sealing device, are applied to the lithium ion battery with lead-out anode and cathode along same direction. The lithium ion battery of the invention has the advantages of simple structure, high efficient production, and reliable sealing quality.

The lithium ion battery of the invention is made by first putting the positive and negative guide needles 4, 5 of the already wound lithium ion battery core 1 through the end cover 3 or the rubber plug 9, or making the positive and negative guide needles 4, 5 riveted to the anode ear 10 and the cathode ear 11 through the end cover, then sealing the lithium ion battery core 1 having the end cover 3 or the rubber plug 9 in the cylindrical aluminum shell 2, and finally sealing the cylindrical aluminum shell 2 containing the lithium ion battery core 1 together with the end cover 3 or the rubber plug 9 by a rolling sealing device, and meanwhile forming the sealing band 7 and the girdling band 8 at the end of the cylindrical aluminum shell 2 to complete the whole production process of the lithium ion battery.

With respect to different electrical appliances, different connection methods can be adopted for the lithium ion battery. The positive and negative guide needles 4, 5 led out in the same direction from the end cover 3 or the rubber plug 9, or the riveted anode ear 10 and the cathode ear 11, all can be conveniently connected with an electrical appliance either in series or in parallel to provide the lithium ion battery with high capacity, high power, and high voltage for the electrical appliance.

The explosion-proof impression 6, either in an X shape or a Y shape or other shapes with the same purpose, is arranged at the bottom of the cylindrical aluminum shell 2. When the lithium ion battery produces gas due to damage, overcharge, or high temperature, such gas can be released from the gas outlet of the explosion-proof impression 6 in time to prevent the lithium ion battery from exploding, thereby improving the safety and reliability of the battery.

While particular embodiments of the invention have been shown and described, it will be obvious to those skilled in the art that changes and modifications may be made without departing from the invention in its broader aspects, and therefore, the aim in the appended claims is to cover all such changes and modifications as fall within the true spirit and scope of the invention.

## Claims

1. A girdled and sealed lithium ion battery with anode and cathode lead-out along same direction in a cylindrical aluminum shell, comprising:
a) a lithium ion battery core;
b) a cylindrical aluminum shell;
c) a positive guide needle of anode;
d) a negative guide needle of cathode;
e) an end cover;
f) a sealing band; and
g) a girdling band;
**characterized in that**,
the lithium ion battery core is arranged within the cylindrical aluminum shell;
the positive guide needle of anode and the negative guide needle of cathode are led out from the end cover;
the lithium ion battery core is sealed in the cylindrical aluminum shell through the sealing band and the girdling band which are molded by rolling; and
a bottom plane of the cylindrical aluminum shell is provided with an explosion-proof impression.

2. The girdled and sealed lithium ion battery with anode and cathode lead-out along same direction in a cylindrical aluminum shell of claim 1, **characterized in that** the positive guide needle of anode and the negative guide needle of cathode are led out in the same direction from the end cover and are respectively riveted to an anode ear and a cathode ear.

3. The girdled and sealed lithium ion battery with anode and cathode lead-out along same direction in a cylindrical aluminum shell of claim 1 or 2, **characterized in that** the end cover is a rubber plug.

4. The girdled and sealed lithium ion battery with anode and cathode lead-out along same direction in a cylindrical aluminum shell of claim 1, **characterized in that** the explosion-proof impression X-shaped or a Y-shaped.
